Europäisches Patentamt

European Patent Office

Office européen des brevets

(19)

(11) **EP 0 804 959 B1**

(12) **EUROPEAN PATENT SPECIFICATION**

(45) Date of publication and mention
of the grant of the patent:
**02.01.2003 Bulletin 2003/01**

(51) Int Cl.[7]: **B01D 53/94**, B01J 29/46

(86) International application number:
**PCT/JP96/02047**

(21) Application number: **96924183.5**

(22) Date of filing: **22.07.1996**

(87) International publication number:
**WO 97/004855 (13.02.1997 Gazette 1997/08)**

(54) **EMISSION CONTROL CATALYST AND EMISSION CONTROL METHOD USING THE SAME**

ABGASENTGIFTUNGSKATALYSATOR UND ABGASENTGIFTUNGSMETHODE ZU SEINER
VERWENDUNG

CATALYSEUR ANTIPOLLUTION ET SON PROCEDE D'UTILISATION

(84) Designated Contracting States:
**DE FR GB IT NL SE**

(30) Priority: **27.07.1995 JP 19231695**

(43) Date of publication of application:
**05.11.1997 Bulletin 1997/45**

(73) Proprietor: **IDEMITSU KOSAN COMPANY
LIMITED
Tokyo 100-0005 (JP)**

(72) Inventors:
• **TAKATU, Kozo Idemitsu Kosan Co., Ltd.
Chiba 299-02 (JP)**

• **KURIHARA, Masato Idemitsu Kosan Co., Ltd.
Chiba 299-02 (JP)**

(74) Representative: **Gille, Christian, Dipl.-Ing.
Gille Hrabal Struck
Neidlein Prop Roos
Brucknerstrasse 20
40593 Düsseldorf (DE)**

(56) References cited:
EP-A- 0 518 341      EP-A- 0 541 008
JP-A- 4 368 339      JP-A- 6 015 183
JP-A- 6 023 272

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

TECHNICAL FIELD

The present invention relates to an exhaust gas purification catalyst which is especially useful for reducing, into non-toxic gases, nitrogen oxides in exhaust gas discharged from mobile internal combustion engines used, for example, in gasoline cars and diesel cars, stationary internal combustion engines used, for example, in cogeneration systems, and various industrial furnaces such as boilers, and removing them, and also to a method for purifying exhaust gas which uses the catalyst.

BACKGROUND ART

Generally, exhaust gases discharged from automobiles, stationary internal combustion engines and various industrial furnaces contain a great amount of nitrogen oxides represented by NO and $NO_2$ (NOx). It is said that such NOx not only causes photochemical smog but also induces diseases in human respiratory organs.

As a method of decreasing NOx, an exhaust gas processing technique using a so-called ternary catalyst system is established that eliminates NOx by reduction in an exhaust gas having a low oxygen concentration, such as that from gasoline cars, by using a reducing agent such as carbon monoxide or hydrocarbon.

On the other hand, in the case of an exhaust gas containing a great amount of oxygen such as that discharged from large-scaled stationary exhaust emission sources such as boilers, a selective NOx reduction process for decreasing the amount of NOx by external addition of ammonia is now under actual operation, which produces some effect.

However, the former method is applicable only to an exhaust gas from a gasoline engine in which the oxygen concentration is extremely low, whereas the latter method is difficult to use in small-sized stationary exhaust emission sources or mobile exhaust emission sources from a standpoint of handling because ammonia is used.

In view of the above, various methods have been studied for using hydrogen, carbon monoxide or various hydrocarbons as reducing agents other than ammonia, but most of them have the drawback that they are non-selective catalytic reduction methods which can eliminate nitrogen oxides only after oxygen in the exhaust gas has been consumed completely.

Although the following methods have been proposed as novel selective catalytic reduction methods capable of overcoming such a drawback (or methods of selectively reducing and eliminating nitrogen oxides even under the coexistence of oxygen), none of them can provide quite satisfactory results.

Published unexamined Japanese patent application Hei 2-149317 proposes a method of using either (1) a catalyst comprising a hydrogen type mordenite or clinoptilolite or (2) a catalyst comprising a hydrogen type mordenite or clinoptilolite supporting a metal such as Cu, Cr, Mn, Fe and Ni, and bringing exhaust smoke containing oxygen resulting from combustion of various fuel into contact with the above-mentioned catalyst under the coexistence of an organic compound thereby eliminating nitrogen oxides in the exhaust smoke.

According to this method, a degree of denitration of from 30 % to 60 % is achieved under the conditions of a reaction temperature of from 300°C to 600°C and a gas hourly space velocity (GHSV) of 1200 h$^{-1}$, but a denitrating effect under a high GHSV condition, i.e., a condition approximate to that of practical use is not clear.

Published unexamined Japanese patent application Hei 1-130735 proposes a method of using a catalyst that comprises a zeolite ion-exchanged with a transition metal (Cu, Co, Ni, Fe, Mg, Mn or the like) as carried by a fire-resistant support, and purifying nitrogen oxides even in an oxidizing atmosphere. This is a method of purifying nitrogen oxides in an exhaust gas from a gasoline engine at high efficiency even in a lean air/fuel ratio region, in which the oxygen concentration in the exhaust gas is about 3 % at most. Accordingly, it is uncertain whether or not nitrogen oxides can be selectively denitrated by reducing also in an exhaust gas from a gasoline engine, such as that under a lean condition of high air/fuel ratio, or even in an exhaust gas from a diesel engine in which the oxygen concentration is from 4 to 10 %. In the examples illustrated in the published Japanese application, the NOx eliminating ratio tended to be lowered greatly with the increase in the oxygen concentration. In addition, the permanence of the catalyst illustrated therein is not clear.

Published unexamined Japanese patent application Sho 63-283727 proposes a method of using a catalyst that comprises a metal such as Cu, V, Fe or Cr as carried by a hydrophobic zeolite with an $SiO_2/Al_2O_3$ ratio of 15 or more, and decreasing nitrogen oxides in an oxygen containing exhaust gas from an internal combustion engine, in the presence of carbon monoxide and hydrocarbon.

In this method, the denitrating ratio is decreased to as low a value as 4 to 26 % in the case of using a zeolite catalyst that carries a metal other than copper. On the other hand, in the case of using a copper-zeolite catalyst, the permanence thereof is not always clear though relatively high activity is obtained. The oxygen concentration in the exhaust gas as tested in the examples illustrated in the published application is 1.6 %, and it is uncertain whether or not nitrogen oxides can also be reduced selectively for denitration if the oxygen concentration is higher under a lean condition of high air/fuel ratio, for example, as in the exhaust gas from a gasoline engine or from a diesel engine.

Published unexamined Japanese patent application Sho 63-100919 proposes a method of using a catalyst that comprises copper as carried by a porous carrier of alumina, silica, zeolite or the like, and eliminating nitrogen oxides in an exhaust gas containing oxygen, in the presence of hydrocarbon.

In this method, the denitrating ratio is from 10 to 20% and no high denitrating activity is obtainable. Further, the oxygen concentration in the exhaust gas as tested in the examples illustrated in the published application is 2.1 %, and it is uncertain whether or not nitrogen oxides can also be reduced selectively for denitrifying if the oxygen concentration is higher. Also, the permanence of the catalyst is uncertain.

The catalytic conversion of organic compounds using a MFI type zeolite is described in EP-A-0 518 341 whereby the MFI type catalyst has a molar ratio of $SiO_2/(Al_2O_3 + Ga_2O_3)$ of 20 to 200 and a molar ratio of $Ga_2O_3/Al_2O_3$ of 0 to 50. The catalysts are particularly suitable for process involving the production of steam and require as an essential feature an acidic hydroxy group, expressed as a specific ratio of peak intensity of SiOH and the acidic hydroxy.

The present invention has been made from the viewpoints mentioned hereinabove, and it is directed to providing an exhaust gas purification catalyst with high durability, which allows highly effective purification of nitrogen oxides into non-toxic gases, even for an exhaust gas having a high oxygen concentration, and providing a method for purifying exhaust gas which uses the catalyst.

We, the present inventors have assiduously studied and, as a result, have found that the above-mentioned objects of the present invention can be effectively attained by employing, as the catalyst carrier, an MFI-type zeolite having a specific amount of SiOH group and having a specific molar ratio of $SiO_2/Al_2O_3$. On the basis of this finding, we have completed the present invention.

Specifically, the present invention is to provide an exhaust gas purification catalyst, which comprises a copper component supported on a catalyst carrier comprising an MFI-type zeolite that has SiOH groups in an amounts of not larger than $5 \times 10^{20}$ groups/g and has a molar ratio, $SiO_2/Al_2O_3$, of from 20 to 200. The copper content of the catalyst is from 0.3 to 3 in terms of the atomic ratio of Cu-Al in the zeolite carrier. This catalyst is used for the purification of exhaust gas, which is conducted in an oxidizing atmosphere at a reaction temperature of from 200°C to 800°C in the presence of a hydrocarbon having a concentration of from 0.5 to 200 in terms of THC/NOx. The oxidizing atmosphere as referred to herein indicates an atmosphere that contains an excess amount of oxygen over the amount of oxygen necessary for completely oxidizing all reducible substances including carbon monoxide, hydrogen and hydrocarbons that exist in the exhaust gas to be purified and even hydrocarbons that may be optionally added to the system, into $H_2O$ and $CO_2$.

BEST MODES OF CARRYING OUT THE INVENTION

Embodiments of the present invention are described hereinunder.

The above-mentioned, MFI-type zeolite for use in the present invention is a zeolite having a crystalline structure similar to ZSM-5, for example, as in "ATLAS OF ZEOLITE STRUCTURE TYPES, W.M. MEIER and D.H. OLSON, THIRD EDITION, 1992, BUTTERWORTH-HEINEMANN", and includes, for example, zeolites of ZSM-5, ZSM-8, zeta 1, zeta 3, Nu-4, Nu-5, TZ-1, TPZ-1, ISI-3, ISI-5 and AZ-1. Two or more of these zeolites can be used herein as mixtures thereof.

The SiOH group (silanol group) content of the MFI-type zeolite for use in the present invention must be not larger than $5 \times 10^{20}$ groups/g. If it is over the value, the durability of the catalyst is lost. From the viewpoint of the durability thereof, the SiOH group content is preferably not larger than $2 \times 10^{20}$ groups/g. It is presumed that, when the SiOH group content in question is not larger than $5 \times 10^{20}$ groups/g, ion-exchanged Cu ions can be kept stably active with ease even at high temperatures or in the presence of moisture.

The SiOH group content can be measured by $^1$H-NMR that may be conducted in the following manner. First, each zeolite as prepared by various methods is substantially completely ion-exchanged with a mineral acid such as hydrochloric acid or with an ammonium salt, and then calcined to give an H-type zeolite. 0.18 g of the resulting H-type zeolite is put into a pre-treating cell, which is then degassed to be a vacuum at 400°C for 4 hours. Then, the $^1$H-MAS-NMR spectrum of the H-type zeolite is measured with the cell at room temperature according to an ordinary method, in which 1.4 mg of polydimethylsiloxane is used as the external standard sample for quantitative determination of [1]H. In the NMR spectrum thus obtained, the intensity of the peak for the OH group as derived from the silanol group, which appears around 1.8 ppm, is compared with that of the peak for polydimethylsiloxane, whereby the intended silanol group content can be obtained through calculation. However, it is to be noted that it will be often impossible to obtain a correct SiOH group content according to the process mentioned above, if the zeolite has been modified, for example, through copper exchange.

In the above-mentioned MFI-type zeolite, the molar ratio of $SiO_2/Al_2O_3$ must be from 20 to 200. Preferably, the ratio is from 30 to 100 in view of the hydrothermal resistance and activity of the zeolite. If the molar ratio is smaller than 20 or than 30, the durability of the zeolite, after having carried a metal thereon, is lowered since the hydrothermal resistance thereof is relatively low. If, however, the molar ratio is larger than 100 or than 200, the amount of the active metal to be carried by the zeolite is lowered since the ion-exchangeable capacity of the zeolite is small, often resulting in that the catalyst could not have good activity.

The means of producing the above-mentioned, MFI-type zeolite for use in the present invention is not specifically defined. For the production, in general, preferably employable are (1) a method of using only inorganic compounds as the raw materials, without adding any organic compounds thereto, and (2) a method of adding any of alcohols, amines and aminoalcohols to the raw materials. In these methods, it is also preferable to add to the raw materials any other zeolites, such as mordenite, as seed crystals. To the conventional method of using a quaternary ammonium compound, such as a tetrapropylammonium salt, as the crystallizing agent, the above-mentioned methods are preferred, as easily producing zeolites having an SiOH group content of not larger than $5 \times 10^{20}$ groups/g.

Prior to supporting the copper component, the catalyst carrier may comprise, in addition to the MFI-type zeolite, any of silica, alumina, silica-alumina, magnesia, zirconia and the like that may act to promote the dispersion of copper in the carrier, in such a degree that the additive does not interfere with the characteristics of the catalyst. Where the carrier comprises any other additional component such as that mentioned above, in addition to the MFI-type zeolite, the amount of the additional component to be added is not specifically defined, but is, in general, preferably from 0 to 90 % by weight, more preferably from 0 to 50 % by weight, relative to the amount of the MFI-zeolite. This is because, if the amount of the additional component is more than 90 % by weight, the catalyst could not often have good activity.

To bring the copper component into the MFI-type zeolite, for example, employable are a method of ion-exchanging the zeolite with copper or impregnation of copper component, and also a method of incorporating a copper component into the zeolite during the synthesis of the zeolite. In these methods, in general, a soluble copper compound may be used as the copper component. The soluble copper compound includes, for example, copper nitrates, halides and carbonates, copper salts of organic acids, and copper ammine complexes. Apart from these, it is also possible to incorporate such a copper component into the catalyst through physical mixing. In this case, further employable is any of copper oxides and hydroxides in addition to the above-mentioned soluble copper compounds. The copper content of the catalyst of the invention is from 0.3 to 3, preferably from 0.4 to 2.5, in terms of the atomic ratio of Cu to Al in the zeolite. If it is less than 0.3, the catalyst could not have good activity since the copper content thereof is too small. If, however, it is more than 3, copper oxide (CuO) aggregates on the surface of the catalyst to have some negative influence on the catalyst in that, for example, it clogs the pores of the zeolite in the catalyst.

If desired, any other element (e.g., transition elements such as Pt, Rh, Cr, Co, Y, Zr, V, Mn, Fe and Zn, elements of Group 13 such as Ga and In, elements of Group 14 such as Sn and Pb, elements of Group 15 such as P and Sb, and elements of Group 2 such as Mg and Ba) can be added to the catalyst of the present invention, in addition to the copper component. Especially preferred is the addition of P, as resulting in the increase in the activity and durability of catalyst. The amount of the additional element except the copper component may be from 0.1 to 5 % by weight, preferably from 0.1 to 2 % by weight, relative to the total weight of the catalyst.

To add the additional element to the catalyst, for example, employable are a method of making the carrier carry the additional element through ion-exchanging or impregnation, during, before or after the step of making it carry the copper component, and a method of physically mixing a component of the element or the element supported by a carrier with the zeolite or the zeolite containing copper.

If further desired, the copper-containing zeolite prepared herein may be pre-treated under heat or with a substance such as an acid, an alkali, steam, ammonia, a halogen or any other non-metallic compound, prior to using it.

The catalyst of the present invention may be shaped into any desired shapes, with a binder such as silica, alumina, silica-alumina, magnesia, zirconia or the like.

The catalyst may be in any desired shapes, e.g., pellet-, plate-, pole- or lattice-shape. The catalyst may be applied to the surface of a base, such as a lattice-like base or a gauze made of, for example, corjelite, mullite or alumina, to be in the form of a catalyst-coated base.

According to the method of the present invention for purifying exhaust gas with the exhaust gas purification catalyst of the invention mentioned hereinabove, for example, an exhaust gas is brought into contact with the catalyst in an oxidizing atmosphere in the presence of a hydrocarbon having a concentration of from 0.5 to 200 in terms of the ratio of THC/NOx, to thereby reduce the nitrogen oxides in the exhaust gas into $N_2$ and $H_2O$ which are then removed.

The THC (total hydrocarbon) concentration as referred to herein indicates the concentration of the hydrocarbon in terms of methane. Concretely, it can be obtained according to the following equation.

$$\text{THC Concentration}$$

$$= \Sigma \text{ [(concentration of hydrocarbon) x (number of}$$

carbon atoms of the hydrocarbon)]

The practical reaction condition for the concentration of the hydrocarbon shall be such that the ratio of THC/NOx is from 0.5 to 200, preferably from 1 to 100. For example, where the NOx concentration is 100 ppm, the THC concentration shall be from 50 to 20,000 ppm.

No denitration will be exhibited with the hydrocarbon content of smaller than the above-mentioned lowermost limit. On the contrary, higher denitration can be provided with the hydrocarbon content of larger than the uppermost limit, which, however, is inadequate by the economic consideration of the system and abnormal heating of the catalyst bed due to the combustion heat of the hydrocarbon.

The hydrocarbon may be a hydrocarbon generally remaining in exhaust gas, but it is preferred to add an additional hydrocarbon from the outside if the amount of the hydrocarbon is smaller than its amount required for causing the intended denitrating reaction or if it is not contained at all in the exhaust gas to be treated according to the method of the invention.

There is no particular restriction on the kind of the hydrocarbon to be added for this purpose, and employable herein are methane, LPG, gasoline, gas oil, kerosene, a heavy oil and the like.

The catalytic reaction temperature may fall between 200°C and 800°C, preferably between 300°C and 600°C. Usually, the degree of denitration is increased with the elevation of the temperature. However, it the temperature is higher than 600°C or than 800°C, the catalyst is unfavorably deteriorated. On the other hand, if it is lower than 200°C or than 300°C, the degree of denitration is lowered.

The gas hourly space velocity (GHSV) may be generally from 2,000 to 200,000 $h^{-1}$, preferably from 5,000 to 100,000 $h^{-1}$. If GHSV is lower than 2,000 $h^{-1}$, the amount of the catalyst to be used is relatively increased though the degree of denitration is high. On the other hand, if it is higher than 200,000 $h^{-1}$, the degree of denitration is lowered.

The exhaust gases to be purified according to the present invention are those gases containing NOx and oxygen, which include, for example, exhaust gases discharged from mobile internal combustion engines in, for example, gasoline cars and diesel cars which perform lean combustion, from stationary internal combustion engines in, for example, cogeneration systems, from boilers, and from other various kinds of industrial furnaces.

Now, the present invention is described concretely hereinunder with reference to the following examples.

[Example 1]

Prepared were: a solution consisting of 18.8 g of aluminium sulfate (18-hydrate), 13.9 g of sulfuric acid (97 %), and 250 g of water (hereinafter referred to as solution A); a solution consisting of 211 g of water glass (28.5 % of $SiO_2$, 9.5 % of $Na_2O$, and 62 % of water), and 250 g of water (hereinafter referred to as solution B); and a solution consisting of 79 g of sodium chloride, and 122 g of water (hereinafter referred to as solution C).

With stirring solution C, gradually and dropwise added thereto solution A and solution B. 0.5 g of a mordenite powder was added to the resulting reaction mixture, which was then put into an autoclave, sealed and heated at 170°C for 20 hours. After having been cooled, the reaction product was washed with water, and then dried at 120°C for 12 hours or more to obtain a zeolite with ZSM structure. This zeolite was calcined in air at 550°C for 4 hours.

The zeolite thus obtained had a molar ratio, $SiO_2/Al_2O_3$, of 29. This was subjected to ion-exchange in an aqueous solution comprising 0.2 mols/liter of copper sulfate to obtain a copper-carrying zeolite catalyst. The copper content of the catalyst was 0.91 in terms of the atomic ratio of Cu/Al.

Prior to the copper exchange, the SiOH content of the zeolite was measured according to the following process. Prior to the copper exchange, the zeolite was subjected to ion-exchange with 10 ml, per gram of the zeolite, of a 1 N ammonium nitrate solution, at 80°C The ion-exchange was carried out two times. Then, after having been dried at 120°C, the thus ion-exchanged zeolite was calcined at 550°C for 4 hours.

0.18 g of the thus-obtained, H-type zeolite was put into a pre-treating cell, degassed to be a vacuum at 400°C for 4 hours. Then, the $^1$H-MAS-NMR spectrum of the H-type zeolite was measured with the cell. For this spectrography, used was 1.4 mg of polydimethylsiloxane as the external standard sample for quantitative determination of [1]H. The SiOH content of the zeolite was obtained from the intensity of the peak at 1.8 ppm, which was $0.4 \times 10^{20}$ groups/g.

Next, the copper-exchanged zeolite catalyst prepared above was evaluated on its initial activity and its activity after steaming, in the manner mentioned below.

To determine its initial activity, the catalyst was charged at 2 cc into a stainless reactor and kept at 350°C, into which was introduced a model gas to be treated with the catalyst at GHSV of 80,000 $h^{-1}$. The model gas used herein comprised NOx of 500 ppm, $O_2$ of 4.5 %, LPG of 833 ppm and hydrocarbon of about 2500 ppm in terms of THC, and had a ratio, THC/NOx, of 5. The gas being discharged from the outlet of the reactor was introduced into a chemiluminescent detector, in which the NOx concentration was measured. The degree of NOx removal from the model gas through the catalytic reaction was calculated by comparing the NOx concentration in the model gas prior to the introduction thereof into the reactor with that therein after the introduction. The results are shown in Table 1.

The activity of the catalyst after steaming was obtained in the following manner. First, the catalyst prepared hereinabove was steamed at 650°C for 8 hours under the conditions of 10 % water, 4.5 % oxygen and GHSV = 80,000 h$^{-1}$. Next, after having been cooled, the resulting catalyst was, in the same manner as above for determining its initial activity, charged into a stainless reactor, into which was introduced the same model gas as in the above. Then, the degree of NOx removal from the model gas was calculated in the same manner as in the above. The results are given in Table 1.

[Example 2]

A catalyst of Example 2 was prepared in the same manner as in Example 1, except that the amount of aluminium sulfate (18-hydrate) was 22.6 g, the amount of sulfuric acid was 13.1 g, that no sodium chloride was used, and that the time for the synthesis was 20 hours.

The molar ratio, $SiO_2/Al_2O_3$, in the zeolite prepared herein was 24.5; the SiOH content of the zeolite was 2.4 x 10$^{20}$ groups/g; and the Cu content of the Cu-exchanged catalyst was 0.85 in terms of the atomic ratio of Cu to Al in the zeolite.

[Example 3]

A catalyst of Example 3 was prepared in the same manner as in Example 1, except that the amount of sodium chloride was 39.5 g and that mordenite was not used.

The molar ratio, $SiO_2/Al_2O_3$, in the zeolite prepared herein was 30.4; the SiOH content of the zeolite was 1.9 x 10$^{20}$ groups/g; and the Cu content of the Cu-exchanged catalyst was 0.88 in terms of the atomic ratio of Cu to Al in the zeolite.

[Example 4]

A catalyst of Example 4 was prepared in the same manner as in Example 1, except that the amount of sulfuric acid was 12.8 g and that 4.7 g of ethanolamine was used as the crystallizing agent in place of mordenite.

The molar ratio, $SiO_2/Al_2O_3$, in the zeolite prepared herein was 28.2; the SiOH content of the zeolite was 1.2 x 10$^{20}$ groups/g; and the Cu content of the Cu-exchanged catalyst was 1.05 in terms of the atomic ratio of Cu to Al in the zeolite.

[Example 5]

A catalyst of Example 5 was prepared in the same manner as in Example 1, except that the amount of sulfuric acid was 12.7 g and that 55.0 g of diethanolamine was used as the crystallizing agent in place of mordenite.

The molar ratio, $SiO_2/Al_2O_3$, in the zeolite prepared herein was 30.2; the SiOH content of the zeolite was 0.8 x 10$^{20}$ groups/g; and the Cu content of the Cu-exchanged catalyst was 0.92 in terms of the atomic ratio of Cu to Al in the zeolite.

[Example 6]

A catalyst of Example 6 was prepared in the same manner as in Example 1, except that the amount of sulfuric acid was 12.1 g and that 11.8 g of n-propylamine was used as the crystallizing agent in place of mordenite.

The molar ratio, $SiO_2/Al_2O_3$, in the zeolite prepared herein was 28.8; the SiOH content of the zeolite was 1.1 x 10$^{20}$ groups/g; and the Cu content of the Cu-exchanged catalyst was 0.94 in terms of the atomic ratio of Cu to Al in the zeolite.

[Example 7]

A catalyst of Example 7 was prepared in the same manner as in Example 1, except that the amount of aluminium sulfate (18-hydrate) was 13.5 g, that the amount of sulfuric acid was 16.2 g, and that the amount of sodium chloride was 39.5 g.

The molar ratio, $SiO_2/Al_2O_3$, in the zeolite prepared herein was 37.2; the SiOH content of the zeolite was 0.4 x 10$^{20}$ groups/g; and the Cu content of the Cu-exchanged catalyst was 0.98 in terms of the atomic ratio of Cu to Al in the zeolite.

[Example 8]

A catalyst of Example 8 was prepared in the same manner as in Example 1, except that the amount of water glass was 158 g, that the amount of aluminium sulfate (18-hydrate) was 7.2 g, that the amount of sulfuric acid was 12.8 g, that of sodium chloride was 29.5 g, that the amount of water was 732 g, that the amount of mordenite was 0.38 g, and that the time for the synthesis was 44 hours.

The molar ratio, $SiO_2/Al_2O_3$, in the zeolite prepared herein was 51.5; the SiOH content of the zeolite was 0.2 x $10^{20}$ groups/g; and the Cu content of the Cu-exchanged catalyst was 1.10 in terms of the atomic ratio of Cu to Al in the zeolite.

[Comparative Example 1]

A catalyst of Comparative Example 1 was prepared in the same manner as in Example 1, except that the amount of sulfuric acid was 12.0 g and that 26.3 g of tetrapropylammonium bromide was used as the crystallizing agent in place of mordenite.

The molar ratio, $SiO_2/Al_2O_3$, in the zeolite prepared herein was 32.1; the SiOH content of the zeolite was 8.9 x $10^{20}$ groups/g; and the Cu content of the Cu-exchanged catalyst was 0.96 in terms of the atomic ratio of Cu to Al in the zeolite.

The conditions for preparing the catalysts of Examples 1 to 8 and Comparative Example 1, and also the physical properties of these catalysts are shown in Table 1, Table 2 and Table 3.

The initial activity of each of these catalysts of Examples 2 to 8 and Comparative Example 1, and also the activity of each of these after having been steamed were measured under the same conditions as in Example 1. The results are shown in Table 1, Table 2 and Table 3.

Table 1

| Example | Example 1 | Example 2 | Example 3 |
|---|---|---|---|
| Amount of Component Added (g) | | | |
| Water Glass | 211 | 211 | 211 |
| $Al_2(SO_4)_3 \cdot 18H_2O$ | 18.8 | 22.6 | 18.8 |
| $H_2SO_4$ (97 %) | 13.9 | 13.1 | 13.9 |
| NaCl | 79.0 | 0 | 39.5 |
| Water | 622 | 622 | 622 |
| Organic Additive | | | |
| amount added | - | - | - |
| Mordenite | 0.5 | 0.5 | - |
| Reaction Temperature (°C) | 170 | 170 | 170 |
| Reaction Time (hr) | 20 | 44 | 20 |
| $SiO_2/Al_2O_3$ (by mol) | 29.0 | 24.5 | 30.4 |
| SiOH/g (x $10^{20}$) | 0.4 | 2.4 | 1.9 |
| Cu Content (as atomic ratio of Cu/Al) | 0.91 | 0.85 | 0.88 |
| Degree of NOx Removal (%) | | | |
| Initial Activity | 75.0 | 73.7 | 67.6 |
| Activity after Steamed | 70.6 | 56.0 | 62.5 |

Table 2

| Example | Example 4 | Example 5 | Example 6 |
|---|---|---|---|
| Amount of Component Added (g) | | | |
| Water Glass | 211 | 211 | 211 |
| $Al_2(SO_4)_3 \cdot 18H_2O$ | 18.8 | 18.8 | 18.8 |
| $H_2SO_4$ (97 %) | 12.8 | 12.7 | 12.1 |
| NaCl | 79.0 | 79.0 | 79.0 |
| Water | 622 | 622 | 622 |
| Organic Additive | *1 | *2 | *3 |
| amount added | 4.7 | 55.0 | 11.8 |
| Mordenite | - | - | - |
| Reaction Temperature (°C) | 170 | 170 | 170 |
| Reaction Time (hr) | 20 | 20 | 20 |
| $SiO_2/Al_2O_3$ (by mol) | 28.2 | 30.2 | 28.8 |
| SiOH/g (x $10^{20}$) | 1.2 | 0.8 | 1.1 |
| Cu Content (as atomic ratio of Cu/Al) | 1.05 | 0.92 | 0.94 |
| Degree of NOx Removal (%) | | | |
| Initial Activity | 81.5 | 77.8 | 80.9 |
| Activity after Steamed | 60.2 | 67.5 | 60.4 |

*1: ethanol,

*2: diethanolamine,

*3: n-propylamine

Table 3

| Example | Example 7 | Example 8 | Comparati ve Example 1 |
|---|---|---|---|
| Amount of Component Added (g) | | | |
| Water Glass | 211 | 158 | 211 |
| $Al_2(SO_4)_3 \cdot 18H_2O$ | 13.5 | 7.2 | 18.8 |
| $H_2SO_4$ (97 %) | 16.2 | 12.8 | 12.0 |
| NaCl | 39.5 | 29.5 | 79.0 |
| Water | 622 | 732 | 622 |
| Organic Additive | | | *4 |
| amount added | - | - | 26.3 |
| Mordenite | 0.5 | 0.4 | - |
| Reaction Temperature (°C) | 170 | 170 | 170 |
| Reaction Time (hr) | 20 | 44 | 20 |
| $SiO_2/Al_2O_3$ (by mol) | 37.2 | 51.5 | 32.1 |
| SiOH/g (x $10^{20}$) | 0.4 | 0.2 | 8.9 |
| Cu Content (as atomic ratio of Cu/Al) | 0.98 | 1.10 | 0.96 |

*4: tetrapropylammonium bromide

Table 3   (continued)

| Example | Example 7 | Example 8 | Comparati ve Example 1 |
|---|---|---|---|
| Degree of NOx Removal (%) | | | |
| Initial Activity | 76.0 | 70.3 | 80.4 |
| Activity after Steamed | 77.0 | 71.9 | 16.4 |

From Table 1, Table .2 and Table 3, it is understood that the catalysts of Examples 1 to 8, in which the MFI-type zeolite has a molar ratio, $SiO_2/Al_2O_3$, of from 20 to 200 and has an SiOH content of not larger than $5 \times 10^{20}$ groups/g, all have much higher activity to remove NOx, even after having been steamed, than the catalyst of Comparative Example 1.

INDUSTRIAL APPLICABILITY

The exhaust gas purification catalyst of the present invention has high catalytic activity even at low temperatures, while having high durability and a long life. According to the method of the invention of using this catalyst for purifying exhaust gas, it is possible to efficiently reduce nitrogen oxides in exhaust gas even having a high oxygen concentration, and to remove them.

**Claims**

1. An exhaust gas purification catalyst, comprising:

   a copper component supported on a zeolite carrier in which the copper content of the catalyst ranges from 0,3 to 3 in terms of the atomic ratio of Cu-Al in the zeolite carrier, said zeolite carrier comprising a MFI-type zeolite having a SiOH group content of not more than $5 \times 10^{20}$ groups /gram and having a molar ratio of $SiO_2/Al_2O_3$ of from 20 to 200.

2. The exhaust gas purifying catalyst according to claim 1, wherein the MFI-type zeolite is one as prepared from a raw material mixture comprising only inorganic substances.

3. The exhaust gas purifying catalyst according to claim 1, wherein the MFI-type zeolite is one as prepared from a raw material mixture additionally containing any of alcohols, amines and aminoalcohols.

4. The exhaust gas purifying catalyst according to any one of claims 1 to 3, wherein the MFI-type zeolite has a molar ratio, $SiO_2/Al_2O_3$, of from 30 to 100.

5. The exhaust gas purifying catalyst according to any one of claims 1 to 4, wherein the MFI-type zeolite has an SiOH group content of not larger than $2 \times 10^{20}$ groups/g.

6. The exhaust gas purifying catalyst according to any one of claims 1 to 5, wherein the catalyst carrier is the MFI-type zeolite.

7. A method for purifying exhaust gas, which comprises bringing exhaust gas into contact with the catalyst of any one of claims 1 to 6, in an oxidizing atmosphere in the presence of a hydrocarbon having a concentration of from 0.5 to 200 in terms of the ratio of THC/NOx, to thereby reduce the nitrogen oxides in the exhaust gas and remove them.

8. The method for purifying exhaust gas according to claim 7, wherein the nitrogen oxides are reduced at a reaction temperature of from 200°C to 800°C in the presence of a hydrocarbon having a concentration of from 1 to 100 in terms of the ratio of THC/NOx, and removed.

**Patentansprüche**

1.  Abgas-Reinigungskatalysator, umfassend:

    eine Kupferkomponente geträgert auf einem Zeolith-Träger, in dem der Kupfergehalt des Katalysators von 0,3 bis 3 als Atomverhältnis Cu-Al im Zeolith-Träger liegt, wobei der Zeolith-Träger einen MFI-Typ-Zeolith mit einem SiOH-Gruppen-Gehalt von nicht mehr als 5 x $10^{20}$ Gruppen/g aufweist und ein molares Verhältnis von $SiO_2/Al_2O_3$ von 20 bis 200 aufweist.

2.  Abgas-Reinigungskatalysator nach Anspruch 1, wobei der MFI-Typ-Zeolith aus einer Rohmaterialmischung hergestellt wird, die nur anorganische Substanzen umfasst.

3.  Abgas-Reinigungskatalysator nach Anspruch 1, wobei der MFI-Typ-Zeolith einer ist, der hergestellt wird aus einer Rohmaterialmischung, welche zusätzlich beliebige Alkohole, Amine und Aminoalkohole enthält.

4.  Abgas-Reinigungskatalysator nach einem der Ansprüche 1 bis 3, wobei der MFI-Typ-Zeolith ein molares Verhältnis $SiO_2/Al_2O_3$ von 30 bis 100 aufweist.

5.  Abgas-Reinigungskatalysator nach einem der Ansprüche 1 bis 4, wobei der MFI-Typ-Zeolith einen SiOH-Gruppen-Gehalt von nicht mehr als 2 x $10^{20}$ Gruppen/g aufweist.

6.  Abgas-Reinigungskatalysator nach einem der Ansprüche 1 bis 5, wobei der Katalysator Träger der MFI-Typ-Zeolith ist.

7.  Verfahren zur Reinigung von Abgas, welches In-Kontakt-Bringen des Abgases mit einem Katalysator nach einem der Ansprüche 1 bis 6 in einer oxidierenden Atmosphäre in Gegenwart eines Kohlenwasserstoffs mit einer Konzentration von 0,5 bis 200 als Verhältnis THC/NOx umfasst, um dadurch die Stickoxide im Abgas zu reduzieren und sie zu entfernen.

8.  Verfahren zur Reinigung von Abgas nach Anspruch 7, wobei die Stickoxide bei einer Reaktionstemperatur von 200°C bis 800°C in Gegenwart eines Kohlenwasserstoffs mit einer Konzentration von 1 bis 100 als Verhältnis THC/NOx reduziert und entfernt werden.


**Revendications**

1.  Catalyseur de purification de gaz d'échappement, comprenant :

    un composant de cuivre supporté sur un zéolite entraîneur dans lequel la teneur en cuivre du catalyseur se situe de 0,3 à 3 en terme du rapport atomique de Cu-Al dans le zéolite entraîneur, ledit zéolite entraîneur comprenant un zéolite de type MFI ayant une teneur en groupe SiOH non supérieure à 5 x $10^{20}$ groupes/gramme et ayant un rapport molaire de $SiO_2/Al_2O_3$ de 20 à 200.

2.  Catalyseur de purification de gaz d'échappement selon la revendication 1, dans lequel le zéolite de type MFI est un zéolite préparé à partir d'un mélange de matériaux bruts comprenant seulement des substances inorganiques.

3.  Catalyseur de purification de gaz d'échappement selon la revendication 1, dans lequel le zéolite de type MFI est un zéolite tel que préparé à partir d'un mélange de matériaux bruts contenant de plus n'importe quel alcool, amine et aminoalcool.

4.  Catalyseur de purification de gaz d'échappement selon l'une quelconque des revendications 1 à 3, dans lequel le zéolite de type MFI a un rapport molaire, $SiO_2/Al_2O_3$, de 30 à 100.

5.  Catalyseur de purification de gaz d'échappement selon l'une quelconque des revendications 1 à 4, dans lequel le zéolite de type MFI a une teneur en groupe SiOH non supérieure à 2 x $10^{20}$ groupes/g.

6.  Catalyseur de purification de gaz d'échappement selon l'une quelconque des revendications 1 à 5, dans lequel le support de catalyseur est le zéolite de type MFI.

**7.** Procédé utilisé pour purifier un gaz d'échappement, qui comprend l'étape consistant à amener un gaz d'échappement en contact avec le catalyseur selon l'une quelconque des revendications 1 à 6 dans une atmosphère oxydante en présence d'un hydrocarbure ayant une concentration de 0,5 à 200 en terme du rapport de THC/NOx, pour ainsi réduire les oxydes d'azote dans le gaz d'échappement et les enlever.

**8.** Procédé utilisé pour purifier un gaz d'échappement selon la revendication 7, dans lequel les oxydes d'azote sont réduits à une température de réaction de 200 °C à 800 °C en présence d'un hydrocarbure ayant une concentration de 1 à 100 en terme du rapport de THC/NOx, puis enlevés.